# EUROPÄISCHE PATENTANMELDUNG

(11) **EP 2 821 985 A2**
(43) Veröffentlichungstag der Anmeldung: **07.01.2015**
(21) Anmeldenummer: 14175221.2
(22) Anmeldetag: 01.07.2014
(51) Int. Cl.: G09F 9/30, G09F 23/00, G09F 19/22, G09F 15/00, A01G 9/02

(54) **Stadtmöbel zur Präsentation von Informationen und Werbung**

(30) Priorität: 04.07.2013 DE 202013006096 U
(71) Anmelder: Green City Solutions GmbH & Co. KG, 01069 Dresden (DE)
(72) Erfinder: Honus, Dénes, 01099 Dresden (DE); Splittgerber, Victor, 01279 Dresden (DE)
(74) Vertreter: Kaufmann, Sigfrid

(57) **Zusammenfassung**

Die Erfindung betrifft ein Stadtmöbel mit mindestens einer vertikalen Informationsfläche (1), auf der eine Information oder Werbung präsentierbar ist. Erfindungsgemäß erfolgt die Darstellung der Information oder Werbung auf der Informationsfläche (1) mittels diskreter Bildpunkte (2), die mit aus horizontal ausgerichteten Pflanztöpfen (6) herauswachsenden Pflanzen (12) und Quadern gebildet sind. Das Stadtmöbel umfasst ferner eine Steuerungseinheit (14), die Informationen angeschlossener Sensoren auswertet und die Bewässerungsanlage steuert. Das Stadtmöbel ermöglicht einen wartungsarmen und kostengünstigen Betrieb und eignet sich besonders für den Einsatz in belebten Innenstädten, da durch die Pflanzen (12) eine deutliche Verbesserung des Mikroklimas ermöglicht ist.

## Beschreibung

Die Erfindung betrifft ein bepflanztes Stadtmöbel mit einer vertikalen Informationsfläche zur Präsentation von Informationen und Werbung. Das Stadtmöbel ermöglicht einen wartungsarmen und kostengünstigen Betrieb und eignet sich insbesondere für einen stationären oder mobilen Einsatz in unbegrünten Innenstadtbereichen.

Im Zuge eines steigenden Umweltbewusstseins und der zunehmenden Luftverschmutzung gewinnt die Begrünung von Stadtzentren immer mehr an Bedeutung, da Pflanzen Feinstaub aus der Luft filtern, die Luft über Verdunstung kühlen, Lärm mindern und Kohlendioxid binden. Aufgrund von Platzmangel stehen jedoch zumeist nur Einzelflächen der Größenordnung 1 m² für Begrünungen, wie beispielsweise Bäume Sträucher oder Blumenkästen, zur Verfügung. Als Alternative zu Bäumen oder Sträuchern sind auch funktionelle Begrünungselemente in der Form von Stadtmöbeln eine willkommene Bereicherung für triste Innenstadtbereiche.

Bei den aus dem Stand der Technik bekannten Stadtmöblierungen wird zwischen Werbe- bzw. Informationsträgern und Pflanzkästen bzw. Blumenanlagen unterschieden, wobei die gepflanzten Anlagen zur Stadtbegrünung, jedoch nicht zur Informationsübermittlung dienen.

Werbe- bzw. Informationsträger gibt es in vielfältigen Ausführungsformen, z. B. als Tafeln oder Litfaßsäulen, wobei diese beleuchtet (d. h. selbstleuchtend oder angestrahlt) oder unbeleuchtet sein können. Ein Werbeträger mit dem Charakter einer Litfaßsäule ist beispielsweise in DE 92 11 338 U1 beschrieben.

Es sind auch Werbetafeln mit angegliederten Blumenkästen bekannt. So ist in EP 0 249 619 B1 ein Stadtmöbel gezeigt, bei dem neben Publizitätsflächen auch zwei Blumenkästen integriert sind.

Ebenfalls sind Bilder und Werbebotschaften aus einer gepflanzten Anordnung verschiedenfarbiger Blumen bekannt. Allerdings sind diese Blumen auf einer horizontalen Fläche gepflanzt, sodass ein entsprechend großer Platz beansprucht und die Lesbarkeit der Werbebotschaft durch die Perspektive gemindert wird. Außerdem bedürfen diese Blumen einer regelmäßigen, manuellen (und somit kostenintensiven) Pflege und Bewässerung.

Vertikale Anordnungen von einer Vielzahl von Einzelpflanzen sind bislang nur zur Begrünung von beispielsweise Hausfassaden bekannt. So ist in DE 38 00 095 A1 ein Pflanzelement zur flächenhaften Wandbegrünung offenbart. FR 2 849 987 B1 zeigt ein hängendes Pflanzenwand-System aus Kunststoff mit kleinen Pflanzschälchen. DE 20 2004 000 438 U1 beschreibt eine Anordnung zur Fassadenbegrünung, die ohne eine Abdeckung der vertikal angeordneten Pflanzbehältnisse auskommt.

Die Wasserversorgung der auf diese Art vertikal angeordneten Pflanzen erfolgt passiv, zumeist über ein textiles Gewebe, welches Wasser aus einem Wasservorratsbehälter zu den Pflanzen führt. Nachteilig bei dieser Art der Bewässerung ist eine permanente Feuchtigkeit, was zu einer erhöhten Anfälligkeit für Schimmelbildung, einer sehr begrenzten Haltbarkeit führt. Überdies ist nur eine einheitliche Bewässerung des Gesamtsystems möglich.

Das Problem bei diesen vertikalen Pflanzanordnungen ist außerdem, dass die Investitionskosten und die hohen Wartungskosten bislang nicht durch den erzeugten Nutzen gedeckt werden können. Ein weiteres Problem ist, dass durch den Eingriff in die Fassadenstruktur über die Wandverankerung, die nötig ist um die Fassadenbegrünung zu befestigen, juristische Probleme in Bezug auf Brandschutz und Isolierung von Gebäuden auftreten. Des Weiteren erschweren Rechte des Architekten an der Unveränderlichkeit seines Werkes und die Akzeptanz der Hausbewohner durch das vermehrte Aufkommen von Insekten die Umsetzung an Gebäudefassaden.

Der Erfindung liegt die Aufgabe zugrunde, ein eine vertikale Informationsfläche beinhaltendes Stadtmöbel zur Verbesserung des Mikroklimas, beispielsweise in einem Innenstadtbereich, zu finden, dessen Wirkungsweise und Erscheinungsbild von lebenden Pflanzen geprägt und von nach dem Stand der Technik bekannten Werbetafeln, wie beispielsweise Plakatwände oder Litfaßsäulen mit Blumenkästen, abweichend ist, wobei gleichzeitig eine automatisierte Pflanzenbewässerung, hohe Standfestigkeit bei hoher Mobilität des Stadtmöbels und für Nachtstunden eine eigene Beleuchtung möglich sein sollen. An dem Stadtmöbel soll ein Anbringen bzw. Wechseln der Pflanzen sowie der dargestellten Information mit wenigen Handgriffen und ohne zusätzlichen technischen Aufwand durchführbar sein.

Die Aufgabe der Erfindung wird durch die Merkmale des Anspruchs 1 gelöst; weitere vorteilhafte Ausführungen der Erfindung ergeben sich aus den Ansprüchen 2 bis 11.

Ausgegangen wird von einem Stadtmöbel in Form einer vertikal aufgestellten Werbeoder Informationstafel. Nach Maßgabe der Erfindung erfolgt die Darstellung einer Information auf einer Informationsfläche der Werbe- oder Informationstafel mittels diskreter Bildpunkte (Pixel), wobei zumindest ein Teil dieser Bildpunkte aus lebenden Pflanzen besteht.

Durch den Einsatz von lebenden Pflanzen in Kombination mit einer Informationsdarstellung können einerseits die Vorteile von Pflanzen, nämlich hohe Luftreinhaltung, Kühlung sowie die Möglichkeit einer angenehmen, aber modernen Atmosphäre erreicht und andererseits z. B. "grüne" (im ökologischen Sinne) Botschaften, die bislang zumeist nur durch traditionelle Plakate oder Tafeln übermittelt wurden, authentisch kommuniziert werden.

Das erfindungsgemäße Stadtmöbel zur Präsentation von Informationen und Werbung umfasst im Wesentlichen die im Folgenden beschriebenen Bauteile:

Eine oder mehrere, vorzugsweise auf zwei gegenüberliegenden Seiten des Stadtmöbels angeordnete, Informationsflächen sind vertikal mittels ein oder mehrerer Aufstellfüße standsicher aufgestellt. Durch die Verwendung von Aufstellfüßen zur Sicherung des Standes des Stadtmöbels kann eine Befestigung auf dem Grund mittels im Boden verankerter Befestigungselemente entfallen. Durch diese Lösung der Aufstellung wird ein Hindernis für die kommerzielle Nutzung umgangen.

Erfindungsgemäß können die Aufstellfüße in Form eines Hohlkörpers oder eines Gestells ausgeführt sein, sodass mittels zusätzlich in die Aufstellfüße einbringbarer Gewichtselemente, wie beispielsweise Betonplatten, deren Gewicht und somit ihre Standfestigkeit erhöhbar ist. Es kann auch vorgesehen sein, das Gewicht durch Einfüllen von Wasser in die Aufstellfüße einzubringen

Auf der Informationsfläche ist eine statische (im physischen Sinne) Werbung und/oder Information aus mehreren in Zeilen und Spalten angeordneten Bildpunkten dargestellt.

Ein einzelner Bildpunkt wird von einem dreidimensionalen (d. h. mit einer Ausdehnung in allen drei Raumrichtungen) Bildpunktelement gebildet. Die Bildpunktelemente sind auf einem Halterungselement befestigt, wobei jeweils nur die (dem Halterungselement abgewandte) Frontseite der Bildpunktelemente als Bildpunkt sichtbar ist. Ein Halterungselement kann mehrere solcher Bildpunktelemente tragen.

Das Halterungselement ist in Form einer rechteckigen, flachen Platte ausgeführt, wobei parallel zu den Seitenkanten über die gesamte Oberfläche in einem gleichmäßigen, rechteckigen Raster durch die Platte durchgängige Ausnehmungen eingebracht sind. Beispielsweise kann das Halterungselement ein Lochblech aus Aluminium oder eloxiertem Stahl mit einer Breite von 260 cm und einer Höhe von 50 cm sein. Diese Ausnehmungen dienen zur Befestigung der Bildpunktelemente an dem Halterungselement, wobei die Befestigung zwar lösbar, aber auch diebstahlsicher ist.

Mehrere identische Halterungselemente bilden eine Bildpunktträgerfläche. Die Halterungselemente sind hierfür in einer Ebene mit ihren Längsseiten parallel nebeneinander in der Art angeordnet, dass eine rechteckige Bildpunktträgerfläche gebildet ist. Die Halterungselemente können sowohl vertikal (d. h. mit ihrer Längsseite lotrecht ausgerichtet) nebeneinander als auch horizontal (d. h. mit ihrer Längsseite waagrecht ausgerichtet) übereinander zu der Bildpunktträgerfläche zusammengesetzt sein. Benachbarte Halterungselemente können sich an ihren Längsseiten gegenseitig kontaktieren, sie können aber auch mit einem Abstand von bis zu zehn Zentimetern zueinander beabstandet angeordnet sein. Vorzugsweise beträgt der Abstand zwischen benachbarten Halterungselementen etwa 1 cm.

Auf der Bildpunktträgerfläche, d. h. den die Bildpunktträgerfläche bildenden Halterungselementen, sind in einer zusammenhängenden Fläche die Bildpunktelemente befestigt, wobei sich benachbarte Bildpunktelemente nicht unmittelbar berühren müssen. Es sind zwei Kategorien von Bildpunktelementen vorgesehen: erfindungsgemäß ist die erste Kategorie ein mit einer Pflanze bepflanzter Pflanztopf und die zweite ein quaderförmiger Körper (Voll- oder Hohlkörper), im Folgenden als "Quader" bezeichnet. Die die Bildpunkte darstellenden Bildpunktelemente sind in der Art nebeneinander befestigt, dass beispielsweise ein Bild, ein Logo oder ein Schriftzug auf der Informationsfläche zu sehen ist.

Hierzu sind die Außenabmessungen der Pflanztöpfe und der Quader vorzugsweise identisch, d. h. die Pflanztöpfe sind ebenfalls quaderförmig, um gleichartige Bildpunktelemente, d. h. Bildpunkte, zu erhalten. Die quaderförmigen Pflanztöpfe bzw. Quader sind parallel zueinander ausgerichtet und nebeneinander in einer Ebene auf den Halterungselementen befestigt.

Die Befestigung der Bildpunktelemente auf der Bildpunktträgerfläche erfolgt mittels Befestigungselementen, die in die Ausnehmungen der Halterungselemente eingeführt und dort fixiert werden.

Die Befestigungselemente können stabförmig ausgeführt sein, wobei die Bildpunktelemente zwischen mindestens zwei Befestigungselementen eingeklemmt und von denselben gehalten sein können. Hierzu können die quaderförmigen Bildpunktelemente an zwei gegenüberliegenden Seitenwänden nutförmige Einbuchtungen aufweisen, sodass sie formschlüssig zwischen zwei stabförmige Befestigungselemente einschiebbar sind.

Vorzugsweise sind die Bildpunktelemente in der Art beweglich mittels der Befestigungselemente an der Bildpunktträgerfläche befestigt, dass sie entlang einer Richtung senkrecht von der Bildpunktträgerfläche weg bewegt werden können, wobei ein Wegbewegen bis zu einem Abstand von etwa 30 cm von der Bildpunktträgerfläche ohne Spezialwerkzeug möglich sein kann. Das vollständige Entfernen eines Bildpunktelementes von der Bildpunktträgerfläche hingegen ist nur mit Spezialwerkzeug möglich.

Erfindungsgemäß sind die Pflanztöpfe waagrecht in der Art an der Bildpunktträgerfläche angeordnet, dass die Pflanzöffnung - d. h. die offene Seite des Pflanztopfes, aus der die Pflanze herauswächst - vertikal angeordnet ist, wodurch die in den Topf eingesetzte Pflanze die Frontseite des Bildpunktelements, d. h. den Bildpunkt, bildet.

Um ein Herausfallen der Pflanzen aus den waagrecht angeordneten Pflanztöpfen zu vermeiden, können diese um einen Winkel aus der Waagrechten heraus mit der Öffnung nach oben geneigt sein. Dieser Neigungswinkel kann bis zu 45° betragen, vorzugsweise ist der Neigungswinkel kleiner als 5°.

Im hinteren Bereich des Pflanztopfes, d. h. in dem an das Halterungselement angrenzenden Bereich, kann ein Substrat, beispielsweise ein anorganisches (wie z. B. bei Hydrokulturen üblich), ein organische Bestandteile enthaltendes Gemisch oder ein vollorganisches, wie z.B. Moos, eingefüllt sein. Durch eine Aussparung in der hinteren Wand des Pflanztopfes wird - beispielsweise über einen Bewässerungsschlauch - Wasser an die Pflanze herangeführt.

Da für einen Betrachter der Informationsfläche jeweils nur die Frontseite der Bildpunktelemente sichtbar ist, entsteht durch die Anordnung der Pflanztöpfe und Quader eine bildpunkthafte Darstellung der auf der Informationsfläche zu sehenden Werbe- oder Informationsbotschaft aus Pflanzenpixeln. Diese Pflanzenpixel werden in der Regel grün sein. Bei Verwendung blühender Pflanzen kann auch auf eine große Auswahl verschiedenster Farben zurückgegriffen werden, wobei jeder Pflanzenpixel eine andere Farbe aufweisen kann. Somit erlaubt die Erfindung auch die Darstellung einer Werbe- oder Informationsbotschaft nur mittels verschiedenfarbiger Pflanzenpixel (d. h. unter Verzicht auf die Quader).

Vorzugsweise wird ein QR-Code auf der Informationsfläche dargestellt, wobei durch eine geeignete Auswahl von Pflanzen und Quadern, bzw. deren Farbe, ein für die Erfassung des Codes mit einem mobilen Endgerät, beispielsweise einem internetfähigen Smartphone, ausreichend hoher Kontrast gebildet ist.

Außerdem umfasst das erfindungsgemäße Stadtmöbel eine Steuerungseinheit und eine mit dieser (elektrisch) verbundene Bewässerungsanlage. Die Bewässerungsanlage beinhaltet vorzugsweise eine oder mehrere Pumpen, einen Wassertank und Schläuche mit Auslasstropfern, die vom Wassertank bzw. der Pumpe zu den Pflanztöpfen geführt sind. Der Wassertank ist vorzugsweise in einem Hohlraum innerhalb des Stadtmöbels angeordnet, sodass er von außen unsichtbar ist. Mittels der Bewässerungsanlage ist jede Pflanze durch einen mit dem Wassertank verbunden Bewässerungsschlauch mit Wasser versorgt.

Die Steuerungseinheit ist ausgebildet, die Bewässerung zeit- oder bedarfsgesteuert auszuführen. Dadurch werden die Pflanzen nur zu vorgegebenen Zeitpunkten mit Wasser versorgt. Die Steuerungseinheit kann z. B. ein handelsüblicher Einplatinencomputer mit einer entsprechenden Steuerungssoftware sein.

Vorteil des erfindungsgemäßen Stadtmöbels zur Präsentation von Informationen und Werbung ist seine ökologische Wirkung sowohl auf den Menschen als auch auf das lokale Mikroklima am Aufstellort. Ein weiterer Vorteil ist die Wartungsfreundlichkeit. Da die Bildpunkte durch einzelne, von den Halterungselementen entfernbare Bildpunktelemente erzeugt werden, kann ein "defekter" Bildpunkt, d. h. eine abgestorbene Pflanze oder ein kaputter Quader, vor Ort einzeln ausgetauscht werden, wobei weder Dreck verursacht, noch das Trägermedium beschädigt wird. Die Bewässerung der Pflanzen erfolgt automatisiert und bedarfsgerecht, sodass die Zyklen manueller Pflanzenpflege im Vergleich zu z. B. Blumenrabatten nach dem Stand der Technik deutlich reduziert sind. Dadurch wiederum werden auch die Wartungskosten reduziert.

Vorteilhaft ist auch die Transportierbarkeit des erfindungsgemäßen Stadtmöbels mit geringem technischem Aufwand. Da die Bildpunktträgerfläche aus mehreren Halterungselementen zusammengesetzt ist, kann die Informationsfläche des Stadtmöbels für einen Transport in kleinere Einzelteile zerlegt werden. Das Fehlen einer Verankerung im Boden aufgrund der soliden Aufstellfüße befördert ebenso ein schnelles Abund Aufbauen.

Die Erfindung kann weiter derart ausgebildet sein, dass die Halterungselemente drehbar innerhalb eines die Bildpunktträgerfläche umfassenden Rahmens gehaltert sind. Hierzu können die Halterungselemente Achsabschnitte aufweisen, die jeweils an den Querseiten in Verlängerung der parallel zur Längsseite verlaufenden Symmetrieachse der Halterungselemente angeordnet sind. Aufgrund der Drehbarkeit der Halterungselemente ist eine vereinfachte Wartung des Stadtmöbels ermöglicht, da die Halterungselemente durch eine halbe Drehung um die Symmetrieachse von der Rückseite zugänglich sind. Auf der Rückseite der Halterungselemente gelegene Anschlüsse für Wasser und Elektrik können somit ohne zeitaufwendiges Zerlegen des Stadtmöbels kontrolliert bzw. repariert werden.

Gemäß einer Ausführungsform sind die Halterungselemente - beispielsweise wie eine Schublade - einzeln aus der Bildpunktträgerfläche herausziehbar. Hierzu können die Halterungselemente jeweils, z. B. mittels Rollen, beweglich an Schienen gehalten sein.

Weiterhin kann vorgesehen sein, dass die Aufstellfüße des Stadtmöbels als Sitzbänke ausgeführt sind. Diese Sitzbänke können als auf beiden Seiten der vertikalen Bildebene elegant herausgeschwungene Bänke ausgeführt sein, die dem Stadtmöbel die nötige Standfestigkeit verleihen. Die Informationsfläche ist in diesem Fall oberhalb der Rückenlehne der Sitzbänke angeordnet. Dies verhindert zum einen ein Verdecken der dargestellten Information (durch die Bank oder durch sitzende Personen) und verbessert aufgrund der erhöhten Positionierung generell die Sichtbarkeit.

Die Erfindung kann weiter derart ausgebildet sein, dass die Quader teleskopierbar sind, d. h., die Quader sind ausziehbar, wobei die Tiefe der Quader veränderbar ist. Im einfachsten Fall können die Quader hierzu aus zwei, d.h. einem ersten und einem zweiten, Teilquadern mit jeweils einer offenen Seitenwand bestehen, wobei die Abmessungen der Teilquader so gewählt sind, dass der erste Teilquader mit seiner offenen Seite voran passgenau in den zweiten Teilquader einsetzbar ist. So kann durch Verschieben des ersten Teilquaders bezüglich des zweiten Teilquaders die Tiefe des zusammengesetzten Quaders verändert werden. Vorteile dieser teleskopierbaren Quader sind, dass dadurch Schnittintervalle für die Pflanzen vergrößert werden können und außerdem das dargestellte Bild weniger störanfällig ist, da die Pflanzen nicht über die Quader wuchern. Beim Schneiden der Pflanzen wird der Quader dann eingezogen, wodurch eine niedrigere Schnitthöhe ermöglicht ist. Dadurch wiederum können die Wartungskosten weiter reduziert werden.

Gemäß einer Ausführungsvariante weist das Stadtmöbel Sensoren auf, die die Feuchtigkeit in den Pflanztöpfen und den Wasserstand im Wassertank erfassen. Es können weitere Sensoren vorgesehen sein, die beispielsweise die Lufttemperatur, Luftfeuchtigkeit, Gehalt an Stickoxiden in der Luft, die Regenmenge und/oder die Umgebungshelligkeit erfassen.

Die Erfindung kann weiter derart ausgebildet sein, dass das Stadtmöbel einen Netzwerkadapter aufweist, mittels dem beispielsweise eine Verbindung in das Internet aufgebaut werden kann. Somit ist es möglich, Daten (beispielsweise Wetterdaten) herunterzuladen oder Daten zum Betriebszustand des Stadtmöbels (beispielsweise für eine grafische Auswertung der erfassten Daten oder zur Benachrichtigung bezüglich eines Servicebedarfs) hochzuladen.

Weiterhin kann vorgesehen sein, dass das Stadtmöbel eine Regenwassersammeleinrichtung aufweist, wobei der Wassertank mit einer Regenwasserauffangeinrichtung verbunden ist. Die Regenwasserauffangeinrichtung kann auf einer oberhalb der mindestens einen Informationsfläche angeordneten Dachfläche des Stadtmöbels installiert sein.

Die Erfindung kann weiter derart ausgebildet sein, dass mit der Bewässerungsanlage auch Nährstoffe zu den Pflanzen geleitet werden. Hierfür kann ein weiterer Flüssigkeitsbehälter mit einer wässrigen Lösung anorganischer Nährsalze, wie zum Beispiel die Knopsche-Nährlösung, vorgesehen sein, dessen Inhalt kontrolliert von der Steuerungseinheit dem für die Bewässerung der Pflanzen vorgesehenen Wasser beigemengt wird.

Gemäß einer Ausführungsform sind die Quader beleuchtbar. Hierfür ist vorzugsweise der gesamte Quader, zumindest aber die Frontfläche der Quader, d. h. die als Bildpunkt sichtbare Fläche, aus einem lichtdurchlässigen Material (beispielsweise semitransparenter Kunststoff, wie PMMA, oder Milchglas) gefertigt. Der Quader weist in seinem Innern einen Hohlraum auf, in welchen eine Lichtquelle, beispielsweise eine Leuchtdiode (LED), eingebracht ist.

Es kann vorgesehen sein, dass einerseits der Quader aus einem farblosen oder weißen, durchscheinenden Material ist und die Lichtquelle Licht einer vorgegebenen Wellenlänge, d. h. einer vorgegebenen Farbe, emittiert, oder dass andererseits der Quader aus einem farbigen, durchscheinenden Material ist, wobei die Lichtquelle weißes Licht aussendet.

Die Erfindung kann weiter derart ausgebildet sein, dass das Stadtmöbel mit einer autarken Energieversorgung, insbesondere der Steuerungseinheit, der Bewässerungsanlage und der Beleuchtung, ausgestattet ist. Die Energieversorgung kann über Batterie, Akkus, Solarmodule oder Windräder erfolgen. Alternativ kann die Energieversorgung zentral über einen Anschluss an ein externes bzw. öffentliches Stromnetz erfolgen.

Die Erfindung wird nachfolgend anhand eines Ausführungsbeispiels mit Bezug auf die beiliegenden Zeichnungen näher erläutert, wobei gleiche oder ähnliche Merkmale mit gleichen Bezugszeichen versehen sind; hierbei zeigen schematisch:
- Figur 1: eine Draufsicht des erfindungsgemäßen Stadtmöbels gemäß einer Ausführungsform;
- Figur 2: eine Seitenansicht des Stadtmöbels gemäß Figur 1;
- Figur 3: eine Draufsicht auf die Bildpunktträgerfläche; und
- Figur 4: einen Querschnitt durch einen Pflanztopf.

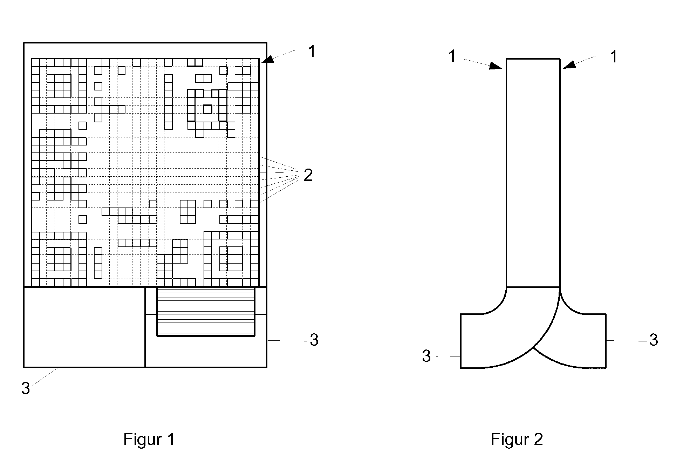

Wie aus den Figuren 1 und 2 ersichtlich, umfasst das Stadtmöbel zwei Informationsflächen 1, die jeweils aus diskreten Bildpunkten 2 aufgebaut sind. Die Informationsflächen 1 sind einander gegenüberliegend, vertikal angeordnet und stehen auf zwei Aufstellfüßen 3, die in diesem Beispiel in Form von jeweils einer bogenförmigen Sitzbank ausgeführt sind.

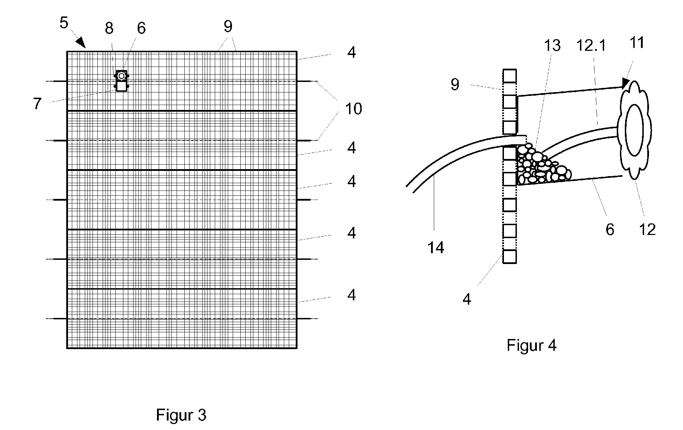

Figur 3 zeigt die aus (in diesem Beispiel) fünf Halterungselementen 4 zusammengesetzte Bildpunktträgerfläche 5. Die Bildpunktelemente in Form von Pflanztöpfen 6 und Kunststoff-Quadern 7 sind mittels stabförmiger Befestigungselemente 8, welche durch Bohrungen 9 der Halterungselemente 4 geführt sind, an der Bildpunktträgerfläche 5 befestigt.

Für eine erleichterte Wartbarkeit des Stadtmöbels sind die Halterungselemente 4 jeweils um eine Drehachse 10 drehbar. Auf diese Art können durch Drehen der Halterungselemente 4 an ihrer Rückseite angebrachte Versorgungsleitungen freigelegt werden.

In Figur 4 ist der an dem Halterungselement 4 in nahezu waagrechter Ausrichtung befestigte Pflanztopf 6 im Querschnitt dargestellt. Der Pflanztopf 6 ist durch seine spezielle Form mit abgeschrägtem Boden um einen Winkel von 4° aus der Waagrechten gekippt. Aus der vertikalen Pflanzöffnung 11 des Pflanztopfs 6 wächst eine Pflanze 12, die in diesem Beispiel als Blume dargestellt ist. Die Wurzeln 12.1 der Pflanze 12 reichen in das Substrat 13, welches über den Bewässerungsschlauch 14 der Bewässerungsanlage mit Wasser und Nährstoffen getränkt wird.

### Liste der verwendeten Bezugszeichen

- 1: Informationsfläche
- 2: Bildpunkt
- 3: Aufstellfuß
- 4: Halterungselement
- 5: Bildpunktträgerfläche
- 6: Pflanztopf
- 7: Quader
- 8: Befestigungselement
- 9: Ausnehmung / Bohrung
- 10: Symmetrieachse / Drehachse
- 11: Pflanzöffnung
- 12: Pflanze
- 12.1: Wurzeln der Pflanze
- 13: Substrat
- 14: Bewässerungsschlauch / Bewässerungsanlage

## Patentansprüche

1. Stadtmöbel zur Präsentation von Informationen und Werbung, aufweisend:
- eine oder mehrere vertikal angeordnete Informationsflächen (1) mit einer statischen Werbung und/oder Information aus mehreren in Zeilen und Spalten angeordneten Bildpunkten (2),
- ein oder mehrere Aufstellfüße (3),
- mehrere Halterungselemente (4) zum Befestigen von Pflanztöpfen (6), und
- eine Steuerungseinheit,
**dadurch gekennzeichnet, dass**
- das Stadtmöbel in einem Hohlraum eine mit einem Wassertank ausgestattete und der Steuerungseinheit verbundene Bewässerungsanlage (14) aufweist,
- das Halterungselement (4) eine rechteckige, flache Platte mit parallel zu den Seitenkanten über die gesamte Oberfläche in gleichmäßigem, rechteckigem Raster eingebrachten Ausnehmungen (9) ist,
- die Informationsfläche (1) mehrere Halterungselemente (4) umfasst, die in einer gemeinsamen vertikalen Ebene in der Art parallel mit ihren Längsseiten nebeneinander aneinandergereiht sind, dass eine zusammenhängende, rechteckige, vertikal angeordnete Bildpunktträgerfläche (5) gebildet ist,
- die auf der Bildpunktträgerfläche (5) angeordneten Bildpunkte (2) Pflanzen (12), welche in eine vertikal ausgerichtete Pflanzöffnung (11) von horizontal angeordneten, quaderförmigen Pflanztöpfen (6) eingebracht sind, und/oder quaderförmige Körper (7) sind, wobei die Pflanztöpfe (6) und die Körper (7) die gleichen Außenabmessungen aufweisen und parallel zueinander ausgerichtet nebeneinander in einer Ebene auf den Halterungselementen (4) befestigt sind, und
- die Pflanztöpfe (6) an der dem Halterungselement (4) zugewandten Rückwand eine mit einer Ausnehmung (9) des Halterungselements (4) überlappende Ausnehmung aufweisen, durch welche ein Bewässerungsschlauch (14) vom Wassertank und/oder ein elektrisches Kabel durch das Halterungselement (4) in den Pflanztopf (6) einführbar ist.

2. Stadtmöbel nach Anspruch 1, **dadurch gekennzeichnet, dass** die die Bildpunktträgerfläche (5) bildenden Halterungselemente (4) jeweils um eine parallel zu ihrer Längsseite verlaufende Symmetrieachse (10) drehbar sind.

3. Stadtmöbel nach Anspruch 1 oder 2, **dadurch gekennzeichnet, dass** zumindest die dem Halterungselement (4) abgewandte Frontfläche der quaderförmigen Körper (7) aus einem lichtdurchlässigen Material ist, wobei die Körper (7) in ihrem Innern einen Hohlraum aufweisen, in welchem jeweils eine Lichtquelle eingebracht ist.

4. Stadtmöbel nach einem der vorstehenden Ansprüche, **dadurch gekennzeichnet, dass** die Aufstellfüße (3) als Sitzbänke ausgebildet sind, wobei die Rückenlehne der Sitzbänke (3) jeweils unterhalb der Informationsfläche (1) angeordnet ist.

5. Stadtmöbel nach einem der vorstehenden Ansprüche, **dadurch gekennzeichnet, dass** die Pflanztöpfe (6) mit einem Neigungswinkel bis zu 45° aus der Horizontalen heraus mit ihren Pflanzöffnungen (11) nach oben geneigt sind.

6. Stadtmöbel nach einem der vorstehenden Ansprüche, **dadurch gekennzeichnet, dass** die Pflanztöpfe (6) und die Körper (7) mit jeweils zwei stabförmigen Befestigungselementen (8), die durch die in die Halterungselemente (4) eingebrachten Ausnehmungen (9) geführt sind und den Pflanztopf (6) oder Körper (7) an zwei gegenüberliegenden Seitenwänden form- und kraftschlüssig in einer Nut von außen kontaktieren, in der Art beweglich an den Halterungselementen (4) befestigt sind, dass der Pflanztopf (6) oder Körper (7) senkrecht zur Bildpunktträgerfläche (5) bis zu einem Abstand von maximal 40 cm verschiebbar ist.

7. Stadtmöbel nach einem der vorstehenden Ansprüche, **dadurch gekennzeichnet, dass** das Stadtmöbel eine Regenwassersammeleinrichtung aufweist, wobei der Wassertank mit einer auf einer der mindestens einen Informationsfläche (1) angeordneten Dachfläche installierten Regenwasserauffangeinrichtung verbunden ist.

8. Stadtmöbel nach einem der vorstehenden Ansprüche, **dadurch gekennzeichnet, dass** auf der Informationsfläche (1) mittels in die Pflanztöpfe (6) eingesetzter Pflanzen (12) und den Körpern (7) ein QR-Code gebildet ist, dessen Kontrast ausreichend für eine Erfassung mit einem mobilen Endgerät ist.

9. Stadtmöbel nach einem der vorstehenden Ansprüche, **dadurch gekennzeichnet, dass** das Stadtmöbel einen mit dem Bewässerungssystem verbundenen Flüssigkeitsbehälter mit einer wässrigen Lösung anorganischer Nährsalze umfasst, wobei die Steuerungseinheit derart ausgebildet ist, dass das Bewässern und Düngen der Pflanzen (12) automatisiert durchführbar ist.

10. Stadtmöbel nach einem der vorstehenden Ansprüche, **dadurch gekennzeichnet, dass** die Steuerungseinheit einen Netzwerkadapter zum Anschluss an das Internet aufweist.

11. Stadtmöbel nach einem der vorstehenden Ansprüche, **dadurch gekennzeichnet, dass** die Energieversorgung über Batterie, Akkus, Solarmodule, Windräder oder einen Anschluss an ein externes Stromnetz erfolgt.

12. Stadtmöbel nach einem der vorstehenden Ansprüche, **dadurch gekennzeichnet, dass** die Aufstellfüße (3) einen Hohlraum und eine Einführöffnung aufweisen, durch welche Gewichtselemente und/oder Wasser in den Hohlraum einführbar sind.

13. Stadtmöbel nach einem der vorstehenden Ansprüche, **dadurch gekennzeichnet, dass** die Körper (7) entlang einer Linie senkrecht zur Bildpunktträgerfläche (5) auszieh- und stauchbar sind, wobei die Längenausdehnung des Körpers (7) senkrecht zur Bildpunktträgerfläche (5) um maximal 40 cm veränderbar ist.

14. Stadtmöbel nach einem der vorstehenden Ansprüche, **dadurch gekennzeichnet, dass** in jedem Pflanztopf (6) ein Sensor zur Detektion der Feuchte eines in dem Pflanztopf (6) eingebrachten Substrates (13) ist.
